# EUROPÄISCHE PATENTSCHRIFT

(11) **EP 1 339 469 B1**
(45) Veröffentlichungstag und Bekanntmachung des Hinweises auf die Patenterteilung: **27.09.2006**
(21) Anmeldenummer: 01999409.4
(22) Anmeldetag: 18.10.2001
(51) Int. Cl.: B01D 3/40

(54) **VERFAHREN UND VORRICHTUNG ZUR AUFTRENNUNG EINES STOFFGEMISCHES IN SEINE BESTANDTEILE DURCH EXTRAKTIVDESTILLATION IN EINER TRENNWANDKOLONNE**
METHOD AND DEVICE FOR SEPARATING A SUBSTANCE MIXTURE INTO THE COMPONENT PARTS THEREOF BY MEANS OF EXTRACTIVE DISTILLATION IN A SEPARATING WALL COLUMN
PROCEDE ET DISPOSITIF SERVANT A SEPARER LES DIFFERENTES COMPOSANTES D'UN MELANGE DE MATIERES, PAR DISTILLATION EXTRACTIVE DANS UNE COLONNE A PAROI DE SEPARATION

(30) Priorität: 08.12.2000 DE 10061220; 18.01.2001 DE 10102168
(43) Veröffentlichungstag der Anmeldung: 03.09.2003
(73) Patentinhaber: Linde Aktiengesellschaft, 65189 Wiesbaden (DE)
(72) Erfinder: BECKER, Hans, 81479 München (DE)
(86) Internationale Anmeldenummer: PCT/EP2001/012059
(87) Internationale Veröffentlichungsnummer: WO 2002/045811

(56) Entgegenhaltungen:
- EP-A- 1 112 769
- WO-A-01/85656
- DE-A- 19 849 651
- DE-C- 10 019 196

## Beschreibung

Die Erfindung betrifft ein Verfahren zur Auftrennung eines Stoffgemisches in drei Bestandteile durch extraktive Destillation sowie eine Vorrichtung zur Durchführung des Verfahrens, wobei die extraktive Destillation bei Anwesenheit eines Lösemittels in einer als Trennwandkolonne ausgebildeten Destillationskolonne durchgeführt wird, die in einem mittleren Abschnitt durch eine vertikale Trennwand in eine Zuspeiseseite und eine Entnahmeseite aufgeteilt ist, wobei sich jeweils oberhalb und unterhalb der Trennwand eine weitere Destillationszone befindet und eine Verbindung zwischen der Zuspeiseseite und der Entnahmeseite unterhalb der Trennwand besteht, und das Stoffgemisch auf der Zuspeiseseite der Trennwandkolonne zugegeben wird, und die extraktive Destillation derart durchgeführt wird, dass die getrennten Bestandteile jeweils im Kopf- und Bodenbereich der Trennwandkolonne sowie in Bereich eines auf der Entnahmeseite vorgesehenen Mittelabzugs gewonnen werden, und die so gewonnenen Bestandteile von der Trennwandkolonne abgezogen werden.

Bei vielen Prozessen der Erdöl- und Erdgasverarbeitung sowie der chemischen und petrochemischen Industrie stellt sich das Problem, Stoffgemische in seine Bestandteile aufzutrennen. Eine übliche Methode besteht in der Destillation des Stoffgemisches, wobei man sich die unterschiedlichen Siedepunkte der einzelnen Bestandteile des Stoffgemisches zu nutze macht. Sehr eng siedende Gemische lassen sich jedoch mit einer normalen Destillation nicht mehr mit wirtschaftlichem Aufwand auftrennen. Bei solchen Gemischen wird häufig die sog. "extraktive Destillation" angewandt. Dabei wird ein Lösemittel eingesetzt, das die relativen Flüchtigkeiten der zu trennenden Bestandteile beeinflusst. Durch den Zusatz des Lösemittels werden die Unterschiede in den relativen Flüchtigkeiten der einzelnen Bestandteile wesentlich vergrößert, so dass eine Auftrennung durch Destillation ermöglicht wird.

Die Druckschrift DE-A-19849651 offenbart ein Verfahren zur Auftrennung eines Stoffgemisches in drei Bestandteile durch extraktive Destillation, wobei die extraktive Destillation bei Anwesenheit eines Lösemittels in einer als Trennwardkolonne ausgebildeten Destillationkolonne durchgeführt wird, die in einem mittleren Abschnitt durch eine vertikale Trennwand in eine Zuspeiseseite und eine Entnahmeseite aufgeteilt ist, wobei sich jeweils oberhalb und unterhalb der Trennwand eine weitere Destillations-Zone befindet und wobei unterhalb der Trennwand eine Verbindung zwischen der Zuspeiseseite und der Entnahmeseite besteht.

Aus der nicht-vorverõffentlichten Druckschrift WO-01/85656 ist ein Verfahren zur Auftrennung eines Stoffgemisches im drei Bestandteile bekannt, bei dem in einer Variante eine Trennwandkolonne verwendet wird. Dabei wird der Bereich Zwischen dem Kopf der Kolonne und der Entnahmestelle des Seitenprodukts frei von jedem Lösemittel gehalten, wodurch in diesem Bereich nicht die Bedingungen eine Extraktivdestillation vorliegen.

Die extraktive Destillation bietet sich insbesondere bei eng siedenden Gemischen an, deren einzelne Bestandteile sich in ihrer Polarität ausreichend unterscheiden. Durch die Anwesenheit eines polaren Lösemittels verschieben sich die relativen Flüchtigkeiten. Unpolare Bestandteile und solche mit einer geringen Polarität werden im Vergleich zu solchen mit mittlerer Polarität relativ flüchtiger und sehr polare Bestandteile werden im Vergleich zu solchen mit nur mittlerer Polarität relativ schwerer. Will man mehr als nur zwei Fraktionen aus solch einem engsiedenden Gemisch gewinnen, dann braucht man entsprechend viele einzelne Extraktivdestillationsschritte, ähnlich, wie es bei der normalen Destillation zur Gewinnung von n-Fraktionen n-1 Destillationsschritte bedarf. Um einen Bestandteil mittlerer Polarität einerseits von relativ unpolaren Bestandteilen und andererseits von noch polareren Bestandteilen abzutrennen, muss man daher zwei Extraktivdestillationen hintereinander schalten.

Die bisherigen Methoden der extraktiven Destillation sind allerdings sehr energieintensiv und erfordern zudem einen hohen Investitionsaufwand, vor allem dann, wenn mehrere Stufen notwendig sind.

Der vorliegenden Erfindung liegt daher die Aufgabe zugrunde, ein Verfahren der eingangs genannten Art sowie eine Vorrichtung zur Durchführung des Verfahrens so auszugestalten, dass der Energiebedarf und der Investitionsaufwand verringert werden.

Diese Aufgabe wird erfindungsgemäß verfahrensseitig dadurch gelöst, dass eine Verbindung zwischen der Zuspeiseseite und der Entnahmeseite oberhalb der Trennwand besteht.

Die Erfindung basiert auf der Überlegung, eine Auftrennung auch von engsiedenden Stoffgemischen in drei Bestandteile in nur einer Stufe zu bewerkstelligen. Während nach dem Stand der Technik hierzu zwei hintereinander geschaltete Stufen notwendig sind, gelingt es mit der Erfindung, die extraktive Destillation in einer einzigen Destillationskolonne durchzuführen. Dadurch werden Energieaufwand und Investitionsbedarf wesentlich verringert. Selbst wenn die Trennwandkolonne größer dimensioniert werden muss als jede der beiden einzelnen der Kolonnen nach dem Stand der Technik, sind deren Gesamtinvestitionskosten deutlich niedriger als jene des Zweikolonnensystems. Durch die thermische Kopplung, die in einer Trennwandkolonne realisiert wird, arbeiten sie thermodynamisch günstiger als die traditionelle Zweikolonnenanordnung. Insbesondere eignet sich die Erfindung zur Auftrennung von Stoffgemischströmen in drei Teilströme, die sich durch unterschiedliche Polaritäten ihrer Bestandteile unterscheiden. Dabei wird ein polares Lösemittel eingesetzt, wobei auf der Zuspeiseseite die unpolaren Bestandteile und/oder solche mit geringer Polarität in den Kopfbereich der Trennwandkolonne getrieben werden, während die Bestandteile mit hoher Polarität in den Bodenbereich der Trennwandkolonne zurückgewaschen werden. Die Bestandteile mit mittlerer Polarität gelangen sowohl über das untere Ende der Trennwand als auch über deren oberes Ende auf die Entnahmeseite. Auf der Entnahmeseite werden die unpolaren Bestandteile und solche mit geringer Polarität in einer Zone oberhalb eines. Mittelabzugs aus rücklaufender Flüssigkeit abgetrieben und die Bestandteile mit höherer Polarität in einer Zone unterhalb des Mittelabzugs aus dem aufsteigenden Gas zurückgewaschen, so dass die Reinheit der Bestandteile mit mittlerer Polarität eingehalten werden kann. Dadurch können im Bereich des Mittelabzugs die Bestandteile mit mittlerer Polarität gewonnen werden, während die unpolaren Bestandteile und/oder solche mit geringer Polarität am Kopf der Trennwandkolonne und die Bestandteile mit hoher Polarität am Boden der Trennwandkolonne gewonnen werden können. Über den Mittelabzug wird schließlich ein Produktstrom, der die Bestandteile mit mittlerer Polarität aufweist, abgeführt, während über einen im oberen Bereich der Trennwandkolonne vorgesehenen Kopfabzug ein Produktstrom, der die unpolaren Bestandteile und/oder Bestandteile mit geringer Polarität aufweist, abgeführt wird. Über einen im unteren Bereich der Trennwandkolonne vorgesehenen Bodenabzug wird das Lösemittel, das die Bestandteile mit hoher Polarität enthält, abgezogen.

Zweckmäßigerweise wird ein schwer siedendes, polares Lösemittel eingesetzt. Dies kann entweder ein reines Lösemittel oder eine Mischung mit Wasser oder auch anderen Lösemitteln sein. Sämtliche für die normale Extraktivdestillation verwendeten Lösemittel können verwendet werden. Es gelten die gleichen Auswahlkriterien wie bei der normalen Extraktivdestillation.

Erfindungsgemäß wird das vom Bodenbereich der Trennwandkolonne abgezogene Lösemittel, das die Bestandteile mit hoher Polarität enthält, einer Regenerationszone zugeführt. Dort werden die Bestandteile mit hoher Polarität vom Lösemittel abgetrennt und als weiteres Produkt gewonnen. Das so regenerierte Lösemittel wird in den Kopfbereich der Trennwandkolonne zurückgeführt.

Es ist ferner vorteilhaft, das Lösemittel aus den jeweiligen Produktströmen durch zurückgeführtes Produkt zurückzuwaschen. Dabei wird das aus dem Produktstrom des Mittelabzugs zurückgewaschene Lösemittel vorzugsweise wieder im Bereich des Mittelabzugs in die Trennwandkolonne zurückgeführt. Falls das Lösemittel Wasser enthält, kann die Rückwaschung des eigentlichen Lösemittels gegebenenfalls auch mit einer zusammen mit dem jeweiligen Produktstrom anfallenden wässrigen Fraktion erfolgen.

Gemäß einer Weiterbildung des Erfindungsgedankens ist die Regenerationszone in den unteren Bereich der Trennwandkolonne integriert. Die Bestandteile mit hoher Polarität werden bei dieser Ausführungsform über einen Seitenabzug, der über der Regenerationszone angeordnet ist, aus der Trennwandkolonne entfernt und der Rückwaschung des Lösemittels zugeführt.

Die Erfindung betrifft femer eine Vorrichtung zur Auftrennung eines Stoffgemisches in drei Bestandteile durch extraktive Destillation.

Erfindungsgemäß wird vorrichtungsseitig die gestellte Aufgabe dadurch gelöst, dass eine Verbindung zwischen der Zuspeiseseite und der Entnahmeseite oberhalb der Trennwand vorgesehen ist. Erfindungsgemäß steht der Bodenabzug mit einer Regeneriereinrichtung in Verbindung, in der die durch extraktive Destillation im Bodenbereich der Trennwandkolonne gewonnen Bestandteile vom Lösemittel abgetrennt werden. An diese Regeneriereinrichtung ist ein Produktabzug angeschlossen, über den die vom Lösemittel abgetrennten Bestandteile als Produkte abgeführt werden. Femer ist an die Regeneriereinrichtung eine Rückführleitung angeschlossen, die mit dem Kopfbereich der Trennwandkolonne in Verbindung steht. Über diese Rückführleitung wird das regenerierte Lösemittel der Trennwandkolonne wieder zugeführt.

Außerdem ist es vorteilhaft, dass Kopfabzug, Mittelabzug und Bodenabzug jeweils mit einer Rückwascheinrichtung in Verbindung stehen, in der das Lösemittel aus den jeweiligen Produktströmen durch zurückgeführtes Produkt zurückgewaschen wird. Dabei weist die mit dem Mittelabzug in Verbindung stehende Rückwascheinrichtung vorzugsweise eine Rückführleitung für zurückgewaschenes Lösemittel auf, die im Bereich des Mittelabzugs an die Trennwandkolonne angeschlossen ist, so dass das zurückgewaschene Lösemittel in diesem Bereich in die Trennwandkolonne wieder eingespeist werden kann.

Gemäß einer besonders bevorzugten Ausführungsform der erfindungsgemäßen Vorrichtung ist die Regeneriereinrichtung in den unteren Bereich der Trennwandkolonne integriert. Dabei ist über der Regenereinrichtung ein Seitenabzug angeordnet, der mit einer Rückwascheinrichtung zum Zurückwaschen des Lösemittels in Verbindung steht.

Unter Umständen kann es aus konstruktiven Gründen erforderlich sein, die Destillationskolonne in zwei oder mehrere Abschnitte aufzuteilen. Die einzelnen Teilkolonnen sind in diesem Fall über Leitungen derart miteinander verbunden, dass die Funktionsweise der einer ungeteilten Destillationskolonne entspricht. Die vorliegende Erfindung betrifft auch derartige geteilte Trennwandkolonnen.

Mit der Erfindung ist eine Reihe von Vorteilen verbunden. So ist es erstmals gelungen, auch engsiedende Stoffgemische in einem einzigen Destillationsschritt durch extraktive Destillation in drei Bestandteile aufzutrennen. Durch das Wegschneiden sowohl eines leichten als auch eines schweren Endes des Stoffgemisches in einem einzigen Apparat kann eine ganze Destillationskolonne und deren Zubehör (Aufkocher, Kondensator, Rücklaufbehälter, Lösemittelzuführungen, Lösemittelabführungen und Pumpen) eingespart werden. Die Erfindung bietet eine wesentliche Verringerung der Gesamtinvestitionskosten, selbst dann, wenn die Trennwandkolonne größer dimensioniert werden muss als jede der beiden einzelnen Kolonnen. Durch die thermische Kopplung, die in der Trennwandkolonne realisiert wird, arbeitet sie thermodynamisch günstiger als die traditionelle Zweikolonnenanordnung. Ein weiterer Vorteil ist, dass bei der Verarbeitung von thermisch empfindlichen Stoffen diese weniger oft aufgekocht werden. Insgesamt wurde eine technisch elegante Lösung geschaffen, wie mit geringem apparativen Aufwand auch engsiedende Stoffgemische durch extraktive Destillation aufgetrennt werden können.

Die Erfindung kann überall angewandt werden, wo aus einem engsiedenden Stoffgemisch mehr als nur zwei Fraktionen durch Extraktivdestillation gewonnen werden sollen. Insbesondere kann die Erfindung mit Vorteil bei der Gewinnung von Aromaten (z.B. Benzol), Olefinen (z.B. Alpha-Olefinen), Dienen (z.B. Butadien) und sauerstoffhaltigen Verbindungen (z.B. Alkohole, Ketone, Ester etc.) eingesetzt werden.

Im folgenden wird die Erfindung anhand von in den Figuren schematisch dargestellten Ausführungsbeispielen näher erläutert, wobei zum Vergleich die bisherigen Lösungen des Standes der Technik ebenfalls in Figuren dargestellt sind.

Es zeigen
- Figur 1: ein Prinzipschema einer zweistufigen Extraktivdestillation einfachster Art nach dem Stand der Technik
- Figur 2: ein Prinzipschema einer zweistufigen Extraktivdestillation mit gemeinsamer Lösemittelregenerierung nach dem Stand der Technik
- Figur 3: ein Prinzipschema einer zweistufigen Extraktivdestillation in einer Trennwandkolonne mit separater Lösemittelregenerierung nach der Erfindung.
- Figur 4: ein Prinzipschema einer vollintegrierten zweistufigen Extraktivdestillation nach der Erfindung

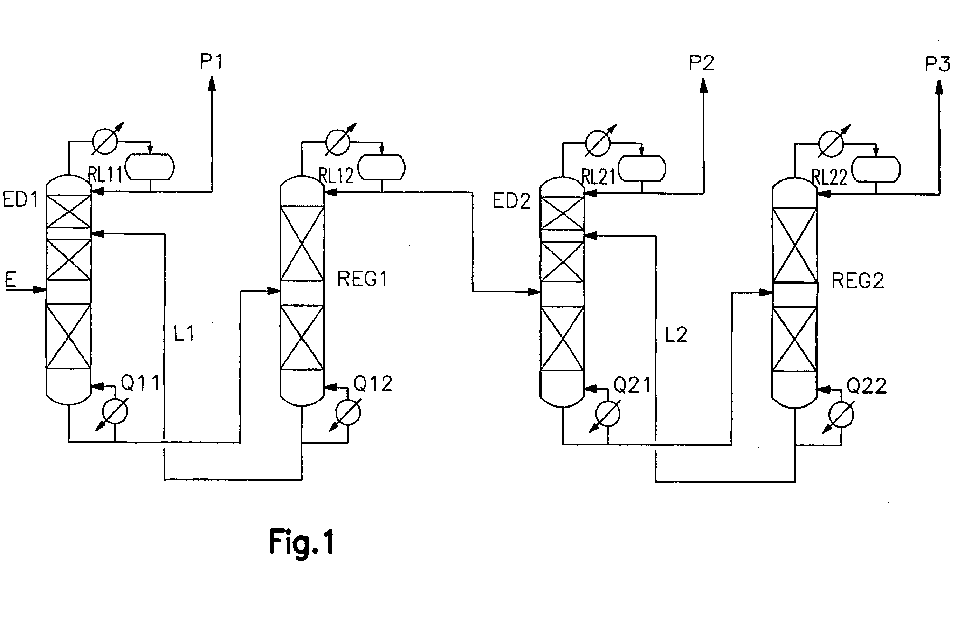

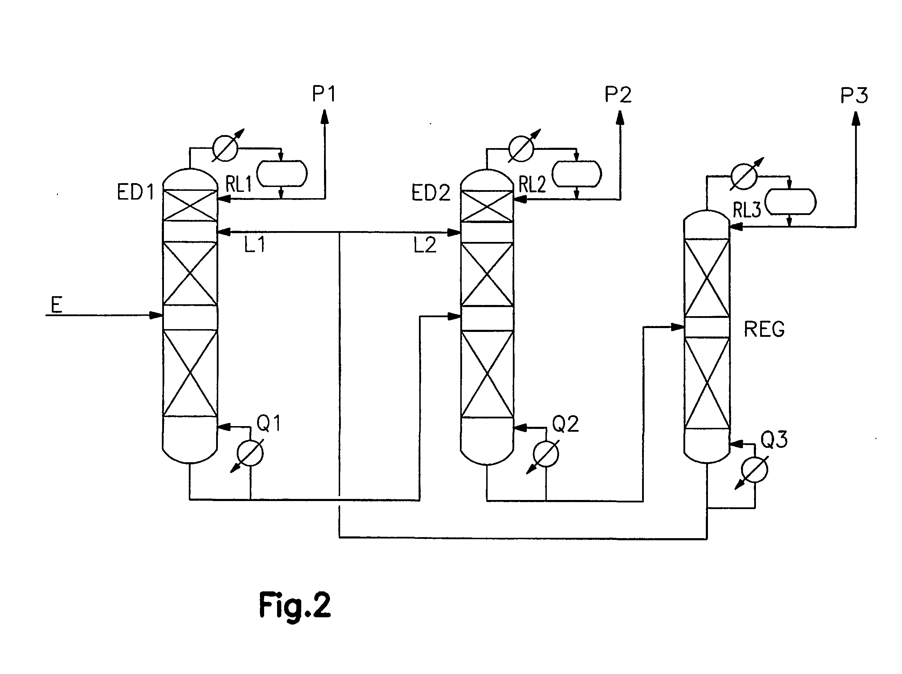

Das grundlegende Prinzip einer Anordnung zur Auftrennung von engsiedenden Stoffgemischen in ihre drei Bestandteile durch extraktive Destillation nach dem Stand der Technik ist in Figur 1 dargestellt. Wie auch in den übrigen Figuren 2, 3 und 4 sind in diesem sehr vereinfachten Schema alle Schritte zur Wärmeintegration und Wärmerückgewinnung weggelassen. In den Figuren 1 - 4 sind die in den Destillationskolonnen jeweils vorhandenen Destillationszonen durch X-Abschnitte gekennzeichnet. In einer ersten Extraktivdestillation ED1 werden aus dem engsiedenden Stoffgemischeinsatz E alle unpolaren Bestandteile und auch solche mit nur geringer Polarität abgetrennt und über Kopf als erstes Produkt P1 gewonnen. Dazu werden die Rücklaufmenge RL11, die Lösemittelmenge L1 und die Sumpfheizung Q11 so eingestellt, dass oberhalb der Einspeisung des Stoffgemischeinsatzes E alle Bestandteile mit einer größeren als einer gewissen Grenzpolarität (und damit mit einer geringeren relativen Flüchtigkeit) aus dem aufsteigenden Dampf zurückgewaschen werden. Unterhalb des Einspeisepunktes werden die unpolaren Bestandteile und solche mit einer geringeren Polarität als besagter Grenzpolarität aus der herunterlaufenden Flüssigkeit abgestrippt. Das über Sumpf abgezogene Lösemittel ist daher nur noch mit den Bestandteilen beladen, deren Polarität jenen Grenzwert überschreitet. Diese werden in der Regenerierkolonne REG1 aus dem Lösemittel ausgetrieben und das über Sumpf abgezogene regenerierte Lösemittel wird erneut in der ersten Extraktivdestillation ED1 eingesetzt. Das Kopfprodukt der Regenerierkolonne REG1, das alle Bestandteile mit einer größeren als besagter Grenzpolarität enthält, wird nun einer zweiten Extraktivdestillation ED2 zugeführt, deren Betriebsbedingungen so eingestellt werden, dass die Bestandteile mit mittlerer Polarität das Kopfprodukt P2 bilden, während alle sehr polaren Bestandteile im Lösemittel verbleiben und mit diesem über Sumpf abgezogen werden. Bei der Regenerierung des Lösemittels in der Regenerierkolonne REG2 fallen die sehr polaren Komponenten als Kopfprodukt P3 an. Das regenerierte Lösemittel L2 selbst wird wieder in die zweite Extraktivdestillation ED2 zurückgeführt.

Figur 2 zeigt ein weiteres, allerdings etwas eleganteres Prinzipschema einer konventionellen Anordnung zum Herausschneiden von Bestandteilen mit mittlerer Polarität aus einem engsiedenden Stoffgemisch. Dabei sind die zweite Extraktivdestillation und eine partielle Regenerierung des Lösemittels der ersten Regenerierstufe der Figur 1 in einer Kolonne zusammengefasst. Auch in diesem sehr vereinfachten Schema sind alle Schritte zur Wärmeintegration und -rückgewinnung weggelassen. Die entsprechenden Anlagenteile und entsprechenden Verfahrensschritte sind mit den selben Bezugsziffem bezeichnet wie in Figur 1. In der ersten Extraktivdestillation ED1 werden aus dem engsiedenden Stoffgemischeinsatz E wieder alle unpolaren Bestandteile und auch solche mit nur geringer Polarität abgetrennt und über Kopf als erstes Produkt P1 gewonnen. Das über Sumpf abgezogene Lösemittel ist wieder nur noch mit den Bestandteilen beladen, deren Polarität jenen Grenzwert überschreitet. Das beladende Lösemittel wird in eine zweite Extraktivdestillation ED2 eingespeist. Deren Kopfprodukt P2 enthält alle Komponenten mit einer mittleren Polarität. Den unteren Teil dieser Kolonne kann man auch als partielle Regenerierung des Lösemittels L1 der ersten Extraktivdestillation ED1 auffassen, denn hier werden alle Bestandteile mit einer mittleren Polarität aus dem Lösemittel ausgetrieben. Das aus der zweiten Extraktivdestillation ED2 über Sumpf abgezogene Lösemittel ist nur noch mit den Bestandteilen mit der größten Polarität beladen. Diese werden in der dritten Kolonne, der Regenerierung REG, aus dem Lösemittel ausgetrieben und als drittes Produkt P3 über Kopf gewonnen. Das nunmehr vollständig regenerierte Lösemittel wird aus dem Sumpf der Regenerierkolonne REG abgezogen und auf die beiden Extraktivdestillationskolonnen ED1 und ED2 verteilt.

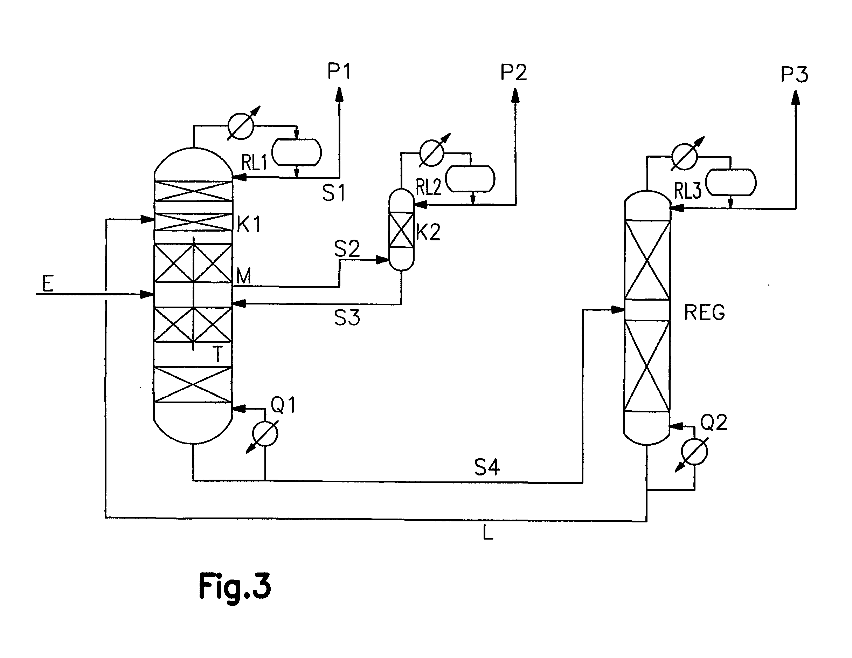

In Figur 3 ist eine zweistufige Extraktivdestillation in einer Trennwandkolonne mit separater Lösemittelrückgewinnung nach der Erfindung dargestellt. Ein Stoffgemischstrom E aus engsiedenden Bestandteilen mit unterschiedlichen Polaritäten wird der Trennwandkolonne K1 zugeführt. Die Trennwandkolonne K1 ist durch eine vertikale Trennwand T in eine Zuspeiseseite, die in der Figur links dargestellt ist, und eine Entnahmeseite, die in der Figur rechts dargestellt ist, unterteilt Durch Regelung der Rücklaufmenge RL1, der Lösemittelmenge L sowie der Sumpfheizung Q1 wird die Trennwandkolonne K1 so betrieben, dass auf der Zuspeiseseite die unpolaren Bestandteile des engsiedenden Einsatzstoffgemisches E und/oder solche Bestandteile mit geringer Polarität in den Kopfbereich der Trennwandkolonne getrieben werden, während die Bestandteile mit hoher Polarität in den Bodenbereich der Trennwandkolonne zurückgewaschen werden. Die Bestandteile mit mittlerer Polarität gelangen dagegen sowohl über das untere Ende der Trennwand T als auch über deren oberes Ende auf die Entnahmeseite der Trennwandkolonne K1.

Dort werden die unpolaren Bestandteile und/oder solche mit geringer Polarität in einer Zone oberhalb des Mittelabzugs M aus rücklaufender Flüssigkeit abgetrieben. Andererseits werden die Bestandteile mit hoher Polarität in einer Zone unterhalb des Mittelabzugs M zurückgewaschen. Auf diese Weise kann die Reinheit der mittleren Fraktion eingehalten werden. Das Einsatzstoffgemisch E wird somit in der Trennwandkolonne K1 in drei verschiedene Produkte von gewünschter Reinheit aufgetrennt, die jeweils als Teilströme vom Kopf- und Bodenbereich sowie über den Mittelabzug M von der Trennwandkolonne K1 abgezogen werden können. Der vom Kopfbereich der Trennwandkolonne K1 abgezogene Teilstrom S1 enthält die unpolaren Bestandteile und/oder solche mit nur geringer Polarität. In dem obersten Abschnitt der Trennwandkolonne (zwischen der Aufgabe des Lösemittels L und der Aufgabe des Rücklaufs RL1) werden die Lösemittedämpfe zurückgewaschen, so dass dieser Produktstrom kein Lösemittel enthält. Er kann unmittelbar als Produkt P1 gewonnen werden. Über den Mittelabzug M wird der gasförmige Teilstrom S2 abgezogen, der die Bestandteile mit mittlerer Polarität enthält. Da der Teilstrom S2 auch Lösemitteldämpfe mitführt, muss dieses in einer Kolonne K2 rückgewonnen werden. In der Kolonne K2 werden die Bestandteile mit mittlerer Polarität von den restlichen Lösemitteldämpfen gereinigt. Das Lösemittel wird schließlich über den Strom S3 im Bereich des Mittelabzugs M in die Trennwandkolonne K1 zurückgeführt. Die in der Kolonne K2 von Lösemittelresten befreiten Bestandteile mit mittlerer Polarität werden schließlich als Produkt P2 gewonnen. Vom Bodenbereich der Trennwandkolonne K1 wird ein Teilstrom S4 abgeführt, der Lösemittel enthält, welches mit den Bestandteilen mit hoher Polarität beladen ist. Der Teilstrom S4 wird einer Regenerierstufe REG zugeführt, die als Destillationskolonne ausgebildet ist In der Regenerierstufe REG werden die Bestandteile mit hoher Polarität aus dem Lösemittel ausgetrieben und können als Produkt P3 gewonnen werden, wobei die Lösemitteldämpfe im oberen Abschnitt der Regenerierkolonne REG zurückgewaschen werden. Das Lösemittel wird schließlich über den Strom L in den oberen Bereich der Trennwandkolonne K1 zurückgeführt. Auf diese Weise können mit einer einzigen Trennwandkolonne K1 aus einem engsiedenden Stoffgemischstrom E drei Produkte P1, P2 und P3 mit hoher Reinheit gewonnen werden.

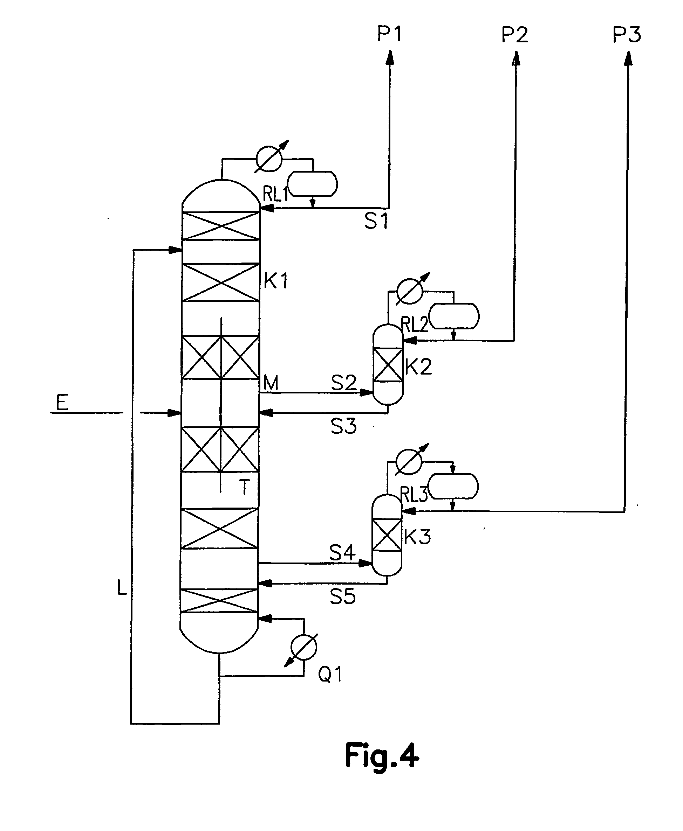

In Figur 4 ist eine Variante der in Figur 3 dargestellten Extraktivdestillation in einer Trennwandkolonne gezeigt. Diese Variante der Erfindung unterscheidet sich von der in Abbildung 3 gezeigten Anordnung dadurch, dass der untere Teil der Regenerierstufe REG in die Trennwandkolonne K1 integriert wurde und der obere (Rückwasch-)Teil durch eine kleinere Seitenkolonne K3 ersetzt wurde, wobei das in dieser Kolonne K3 zurückgewonnene Lösemittel unmittelbar in die Trennwandkolonne K1 zurückgeführt wird. Auf diese Weise entsteht eine vollintegrierte zweistufige Extraktivdestillation, die aus einer einzigen Trennwandkolonne K1 und zwei kleinen Seitenkolonnen K2 und K3 besteht. Bei dieser Anordnung wird eine besonders hohe Wirtschaftlichkeit durch größtmögliche Verringerung des Energiebedarfs und des Investitionsaufwands erreicht.

## Patentansprüche

1. Verfahren zur Auftrennung eines Stoffgemisches in drei Bestandteile durch extraktive Destillation, wobei, die extraktive Destillation bei Anwesenheit eines Lösemittels in einer als Trennwandkolonne (K1) ausgebildeteten Destillationskolonne (K1) durchgeführt wird, die in einem mittleren Abschnitt durch eine vertikale Trennwand (T) in eine Zuspeiseseite und eine Entnahmeseite aufgeteilt ist, wobei sich jeweils oberhalb und unterhalb der Trennwand (T) eine weitere Destillationszone befindet und eine Verbindung zwischen der Zuspeiseseite und der Entnahmeseite unterhalb der Trennwandkolonne besteht, und das Stoffgemisch auf der Zuspeiseseite der Trennwandkolonne (K1) zugegeben wird, und die extraktive Destillation derart durchgeführt wird, dass die getrennten Bestandteile jeweils im Kopf- und Bodenbereich der Trennwandkolonne sowie im Bereich eines auf der Entnahmeseite vorgesehenen Mittelabzugs (M) gewonnen werden, und die so gewonnenen Bestandteile von der Trennwandkolonne (K1) abgezogen werden, wobei eine Verbindung zwischen der Zuspeiseseite und der Entnahmeseite oberhalb der Trennwand (T) besteht und das vom Bodenbereich der Trennwandkolonne (K1) abgezogene Lösemittel, das Bestandteile mit hoher Polarität enthält, einer Regenerationszone (REG) zugeführt wird, in der die Bestandteile mit hoher Polarität vom Lösemittel abgetrennt und als weiteres Produkt gewonnen werden, während das so regenerierte Lösemittel in den Kopfbereich der Trennwandkolonne (K1) zurückgeführt wird.

2. Verfahren nach Anspruch 1, **dadurch gekennzeichnet, dass** zur Auftrennung eines Stoffgemischstromes in drei Teilströme, die sich durch unterschiedliche Polaritäten ihrer Bestandteile unterscheiden, ein polares Lösemittel eingesetzt wird, wobei
a) auf der Zuspeiseseite die unpolaren Bestandteile und/oder solche mit geringer Polarität in den Kopfbereich der Trennwandkolonne (K1) getrieben werden, während die Bestandteile mit hoher Polarität in den Bodenbereich der Trennwandkolonne (K1) zurückgewaschen werden, und die Bestandteile mit mittlerer Polarität sowohl über das untere Ende der Trennwand (T) als auch über deren oberes Ende auf die Entnahmeseite gelangen,
b) auf der Entnahmeseite die unpolaren Bestandteile und/oder solche mit geringer Polarität in einer Zone oberhalb eines Mittelabzugs (M) aus rücklaufender Flüssigkeit abgetrieben werden und die Bestandteile mit hoher Polarität in einer Zone unterhalb des Mittelabzugs (M) aus dem aufsteigendem Gas zurückgewaschen werden, so dass im Bereich des Mittelabzugs (M) die Bestandteile mit mittlerer Polarität gewonnen werden, während die unpolaren Bestandteile und/oder solche mit geringer Polarität am Kopf der Trennwandkolonne (K1) und die Bestandteile mit hoher Polarität am Boden der Trennwandkolonne (K1) gewonnen werden, und
c) über den Mittelabzug (M) ein Produktstrom, der die Bestandteile mit mittlerer Polarität aufweist, abgeführt wird, während über einen im oberen Bereich der Trennwandkolonne (K1) vorgesehenen Kopfabzug ein Produktstrom, der die unpolaren Bestandteile und/oder Bestandteile mit geringer Polarität aufweist, abgezogen wird und über einen im unteren Bereich der Trennwandkolonne (K1) vorgesehenen Bodenabzug das Lösemittel, das die Bestandteile mit hoher Polarität enthält, abgeführt wird.

3. Verfahren nach Anspruch 2, **dadurch gekennzeichnet, dass** das Lösemittel aus den jeweiligen Produktströmen durch zurückgeführtes Produkt zurückgewaschen wird.

4. Verfahren nach Anspruch 3, **dadurch gekennzeichnet, dass** das aus dem Produktstrom des Mittelabzugs (M) zurückgewaschene Lösemittel wieder im Bereich des Mittelabzugs (M) in die Trennwandkolonne (K1) zurückgeführt wird.

5. Verfahren nach einem der Ansprüche, 2 bis 4, **dadurch gekennzeichnet, dass** die Regenerationszone (REG) in den unteren Bereich der Trennwandkolonne (K1) integriert ist und dass die Bestandteile mit hoher Polarität über einen Seitenabzug, der über der Regenerationszone (REG) angeordnet ist, aus der Trennwandkolonne entfernt und der Rückwaschung des Lösemittels zugeführt werden.

6. Verfahren nach Anspruch 4 oder 5 **dadurch gekennzeichnet, dass** der Mittel- bzw. der Seitenabzug aus dem unteren Bereich als Gas aus der Trennwandkolonne (K1) abgezogen und der jeweiligen Rückwaschung des Lösemittels zugeführt werden.

7. Vorrichtung zur Durchführung des Verfahrens der Ansprüche 1-6 zur Auftrennung eines Stoffgemisches in drei Bestandteile durch extraktive Destillation, mit einer als Trennwandkolonne (K1) ausgebildeten Destillationskolonne (K1), die in einem mittleren Abschnitt durch eine Trennwand (T) in eine Zuspeiseseite und eine Entnahmeseite aufgeteilt ist, wobei sich jeweils oberhalb und unterhalb der Trennwand (T) eine weitere Destillationszone befindet und eine Verbindung zwischen der Zuspeiseseite und der Einspeiseseite unterhalb der Trennwand (T) besteht, und auf der Zuspeiseseite eine Zuführung für das Stoffgemisch angeordnet ist und auf der Entnahmeseite ein Mittelabzug (M) für einen durch extraktive Destillation gewonnen Bestandteil angeordnet ist, während im Kopfbereich der Trennwandkolonne (K1) ein Kopfabzug und im Bodenbereich der Trennwandkolonne (K1) ein Bodenabzug für die beiden anderen durch extraktive Destillation gewonnen Bestandteile angeordnet sind, und die Trennwandkolonne (K1) eine Lösemittelzuführung (L) aufweist, wobei eine Verbindung zwischen der Zuspeiseseite und der Entnahmeseite oberhalb der Trennwand (T) vorgesehen ist und der Bodenabzug mit einer Regeneriereinrichtung in Verbindung steht, in der die durch extraktive Destillation im Bodenbereich der Trennwandkolonne gewonnenen Bestandteile vom Lösemittel abgetrennt werden, wobei an die Regeneriereinrichtung ein Produktabzug für die vom Lösemittel abgetrennten Bestandteile und eine Rückführleitung für das regenerierte Lösemittel angeschlossen sind, und die Rückführleitung mit dem Kopfbereich der Trennwandkolonne in Verbindung steht.

8. Vorrichtung nach Anspruch 7, d**adurch gekennzeichnet, dass** Kopfabzug, Mittelabzug (M) und Bodenabzug jeweils mit einer Rückwascheinrichtung in Verbindung stehen, in der das Lösemittel aus den jeweiligen Produktströmen durch zurückgeführtes Produkt zurückgewaschen wird.

9. Vorrichtung nach Anspruch 8, **dadurch gekennzeichnet, dass** die mit dem Mittelabzug (M) in Verbindung stehende Rückwascheinrichtung eine Rückführleitung für zurückgewaschenes Lösemittel aufweist, die im Bereich des Mittelabzugs (M) an die Trennwandkolonne (K1) angeschlossen ist.

10. Vorrichtung nach einem der Ansprüche 7 bis 9, **dadurch gekennzeichnet, dass** die Regeneriereinrichtung (REG) in den unteren Bereich der Trennwandkolonne (K1) integriert ist, wobei über der Regeneriereinrichtung (REG) ein Seitenabzug angeordnet ist, der mit einer Rückwascheinrichtung zum Zurückwaschen des Lösemittels in Verbindung steht.

## Claims

1. Process for separating a mixture of substances into three constituents by extractive distillation, the extractive distillation being carried out in the presence of a solvent in a distillation column (K1) which is designed as a dividing-wall column (K1) and is divided in a middle section into a feed side and a removal side by a vertical dividing wall (T), there being a further distillation zone in each case above and below the dividing wall (T) and a connection between the feed side and the removal side below the dividing-wall column, and the mixture of substances being added to the dividing-wall column (K1) on the feed side, and the extractive distillation being carried out in such a manner that the separated constituents are in each case obtained in the top and bottom region of the dividing-wall column and in the region of a centre take-off (M) provided on the removal side, and the constituents obtained in this way being taken off from the dividing-wall column (K1), there being a connection between the feed side and the removal side above the dividing wall (T) and the solvent which has been withdrawn from the bottom region of the dividing-wall column (K1) and which contains constituents with a high polarity is fed to a regeneration zone (REG), in which the constituents with a high polarity are separated from the solvent and obtained as further product, while the solvent which has been regenerated in this way is returned to the top region of the dividing-wall column (K1).

2. Process according to Claim 1, **characterized in that**, for separating a substance-mixture stream into three part-streams which differ through different polarities of their constituents, a polar solvent is used, wherein
a) on the feed side, the nonpolar constituents and/or the constituents with a low polarity are driven into the top region of the dividing-wall column (K1), while the constituents with a high polarity are washed back into the bottom region of the dividing-wall column (K1), and the constituents with a medium polarity level pass to the removal side both via the bottom end of the dividing wall (T) and via its top end,
b) on the removal side, the nonpolar constituents and/or the constituents with a low polarity are driven out of reflux liquid in a zone above a centre take-off (M), and the constituents with a high polarity are washed back out of the rising gas in a zone below the centre take-off (M), so that the constituents with a medium polarity level are obtained in the region of the centre take-off (M) while the nonpolar constituents and/or the constituents with a low polarity are obtained at the top of the dividing-wall column (K1) and the constituents with a high polarity are obtained at the bottom of the dividing-wall column (K1), and
c) a product stream which includes the constituents with a medium polarity level is discharged via the centre take-off (M), while a product stream, which includes the nonpolar constituents and/or constituents with a low polarity, is taken off via a top take-off provided in the upper region of the dividing-wall column (K1), and the solvent, which contains the constituents with a high polarity, is discharged via a bottom take-off provided in the lower region of the dividing-wall column (K1).

3. Process according to Claim 2, **characterized in that** the solvent is washed back out of the respective product streams by product which has been returned.

4. Process according to Claim 3, **characterized in that** the solvent which has been washed back out of the product stream of the centre take-off (M) is returned again to the dividing-wall column (K1) in the region of the centre take-off (M).

5. Process according to any of Claims 2 to 4, **characterized in that** the regeneration zone (REG) is integrated in the lower region of the dividing-wall column (K1), and **in that** the constituents with a high polarity are removed from the dividing-wall column via a side take-off, which is arranged above the regeneration zone (REG), and are fed to the back-washing of the solvent.

6. Process according to Claim 4 or 5, **characterized in that** the centre or side take-off are taken off as gas from the lower region of the dividing-wall column (K1) and fed to the respective back-washing of the solvent.

7. Apparatus for carrying out the process of Claims 1 to 6 for separating a mixture of substances into three constituents by extractive distillation, having a distillation column (K1) which is designed as a dividing-wall column (K1) and in a middle section is divided into a feed side and a removal side by a dividing wall (T), there being a further distillation zone in each case above and below the dividing wall (T) and a connection between the feed side and the removal side below the dividing wall (T), and a feed for the mixture of substances being arranged on the feed side and a centre take-off (M) for the one constituent obtained by extractive distillation being arranged on the removal side, while a top take-off in the top region of the dividing-wall column (K1) and a bottom take-off in the bottom region of the dividing-wall column (K1) are provided for the other two constituents obtained by extractive distillation, and the dividing-wall column (K1) has a solvent feed (L), a connection being provided between the feed side and the removal side above the dividing wall (T) and the bottom take-off being connected to a regeneration device, in which the constituents obtained by extractive distillation in the bottom region of the dividing-wall column are separated from the solvent, a product take-off for the constituents which have been separated from the solvent and a return line for the regenerated solvent being connected to the regeneration device, and the return line being connected to the top region of the dividing-wall column.

8. Apparatus according to Claim 7, **characterized in that** top take-off, centre take-off (M) and bottom take-off are each connected to a back-washing device, in which the solvent is washed back out of the respective product streams by returned product.

9. Apparatus according to Claim 8, **characterized in that** the back-washing device which is connected to the centre take-off (M) has a return line for back-washed solvent, which is connected to the dividing-wall column (K1) in the region of the centre take-off (M).

10. Apparatus according to any of Claims 7 to 9, **characterized in that** the regeneration device (REG) is integrated in the lower region of the dividing-wall column (K1), a side take-off, which is connected to a back-washing device for washing back the solvent, being arranged above the regeneration device (REG).

## Revendications

1. Procédé pour séparer un mélange de matières en trois composants par distillation extractive, dans lequel la distillation extractive est effectuée en présence d'un solvant dans une colonne de distillation (K1) se présentant sous la forme d'une colonne à paroi de séparation (K1), qui est partagée dans une section centrale par une paroi de séparation verticale (T) en un côté d'alimentation et un côté de retrait, dans lequel il y a une autre zone de distillation respectivement au-dessus et en dessous de la paroi de séparation (T) et un raccordement entre le côté d'alimentation et le côté de retrait en dessous de la colonne à paroi de séparation, le mélange de matières est ajouté sur le côté d'alimentation de la colonne à paroi de séparation (K1) et 1a distillation extractive est effectuée de sorte que les composants séparés soient obtenus, respectivement, dans la zone de tête et dans la zone de bas de la colonne à paroi de séparation ainsi que dans la zone d'une décharge centrale (M) prévue sur le côté de retrait, et que les composants obtenus de la sorte soient extraits de la colonne à paroi de séparation (K1), dans lequel un raccordement existe entre le côté d'alimentation et le côté de retrait au-dessus de la paroi de séparation (T) et le solvant extrait de la zone de bas de la colonne à paroi de séparation (K1), qui contient des composants de polarité élevée, est acheminé à une zone de régénération (REG), dans laquelle les composants de polarité élevée sont séparés du solvant et récupérés comme autre produit, tandis que le solvant régénéré de la sorte est recyclé dans la zone de tête de la colonne à paroi de séparation (K1).

2. Procédé selon la revendication 1, **caractérisé en ce que**, pour séparer un courant de mélange de matières en trois courants partiels qui se différencient par des polarités différentes de leurs composants, on utilise un solvant polaire, dans lequel :
a) sur le côté d'alimentation, les composants apolaires et/ou ceux de faible polarité sont entraînés dans la zone de tête de la colonne à paroi de séparation (K1), tandis que les composants de polarité élevée sont relavés dans la zone de bas de la colonne à paroi de séparation (K1) et les composants de polarité moyenne parviennent au côté de retrait autant par l'extrémité inférieure de la paroi de séparation (T) que par son extrémité supérieure,
b) sur le côté de retrait, les composants apolaires et/ou ceux de faible polarité sont strippés du liquide refluant dans une zone au-dessus d'une décharge centrale (M) et les composants de polarité élevée sont relavés dans une zone en dessous de la décharge centrale (M) à partir du gaz montant de manière à obtenir les composants de polarité moyenne dans la zone de la décharge centrale (M), tandis que les composants apolaires et/ou ceux de faible polarité sont obtenus en tête de la colonne à paroi de séparation (K1) et les composants à polarité élevée dans le bas de la colonne à paroi de séparation (K1) et
c) un flux produit qui présente les composants de polarité moyenne est évacué via la décharge centrale (M), tandis que, via une décharge de tête prévue dans la zone supérieure de la colonne à paroi de séparation (K1), on retire un flux produit qui présente les composants apolaires et/ou les composants de faible polarité et le solvant qui contient les composants de polarité élevée est évacué via une décharge de bas prévue dans la zone inférieure de la colonne à paroi de séparation (K1).

3. Procédé selon la revendication 2, **caractérisé en ce que** le solvant des flux produits respectifs est relavé par du produit recyclé.

4. Procédé selon la revendication 3, **caractérisé en ce que** le solvant relavé du flux de produit de la décharge centrale (M) est recyclé dans la zone de la décharge centrale (M) dans la colonne à paroi de séparation (K1).

5. Procédé selon l'une quelconque des revendications 2 à 4, **caractérisé en ce que** la zone de régénération (REG) est intégrée à la zone inférieure de la colonne à paroi de séparation (K1) et **en ce que** les composants de polarité élevée sont éliminés de la colonne à paroi de séparation via une décharge latérale qui est agencée via la zone de régénération (REG) et sont acheminés au lavage à contre-courant du solvant.

6. Procédé selon la revendication 4 ou 5, **caractérisé en ce que** la décharge centrale ou la décharge latérale est retirée de la zone inférieure sous forme de gaz de la colonne à paroi de séparation (K1) et est acheminée au lavage à contre-courant respectif du solvant.

7. Dispositif de mise en oeuvre du procédé des revendications 1 à 6 pour séparer un mélange de matières en trois composants par distillation extractive comprenant une colonne de distillation (K1) sous forme de colonne à paroi de séparation (K1) qui est divisée dans une section centrale par une paroi de séparation (T) en un côté d'alimentation et un côté de retrait, dans lequel se trouve une autre zone de distillation respectivement au-dessus et en dessous de la paroi de séparation (T) et il existe un raccordement entre le côté d'alimentation et le côté d'injection en dessous de la paroi de séparation et une alimentation pour le mélange de matières est agencée sur le côté d'alimentation et une décharge centrale (M) est agencée sur le côté de retrait pour un composant obtenu par distillation extractive, tandis que sont agencées une décharge de tête, dans la zone de tête de la colonne à paroi de séparation (K1), et une décharge de bas de colonne dans 1a zone du bas de colonne à paroi de séparation pour les deux autres composants obtenus par distillation extractive et la colonne à paroi de séparation (K1) présente une alimentation en solvant (L), dans lequel il est prévu un raccordement entre le côté d'alimentation et le côté de retrait au-dessus de la paroi de séparation et la décharge de bas est en liaison avec un dispositif de régénération dans lequel les composants obtenus par distillation extractive dans la zone du bas de la colonne à paroi de séparation sont séparés du solvant, une décharge produit pour les composants séparés du solvant et une conduite de recyclage pour le solvant régénéré étant raccordés et la conduite de recyclage étant en liaison avec la zone de tête de la colonne à paroi de séparation.

8. Dispositif selon la revendication 7, **caractérisé en ce que** la décharge de tête, la décharge centrale (M) et la décharge de bas sont respectivement en liaison avec un dispositif de recyclage dans lequel le solvant des flux produits respectifs est relavé par du produit recyclé.

9. Dispositif selon la revendication 8, **caractérisé en ce que** le dispositif de recyclage en liaison avec la décharge centrale (M) présente une conduite de recyclage pour du solvant relavé qui est raccordée dans la zone de la décharge centrale (M) à la colonne à paroi de séparation (K1).

10. Dispositif selon l'une quelconque des revendications 7 à 9, **caractérisé en ce que** le dispositif de régénération (REG) est intégré à la zone inférieure de la colonne à paroi de séparation (K1), dans lequel il est prévu, au-dessus du dispositif de régénération (REG), une décharge latérale qui est en liaison avec un dispositif de recyclage pour relaver le solvant.
